Europäisches Patentamt

European Patent Office

Office européen des brevets

(19)

(11) **EP 1 445 842 A2**

(12) **EUROPÄISCHE PATENTANMELDUNG**

| | |
|---|---|
| (43) Veröffentlichungstag:<br>**11.08.2004 Patentblatt 2004/33** | (51) Int Cl.[7]: **H01S 3/109**, H01S 3/081 |

(21) Anmeldenummer: **04000259.4**

(22) Anmeldetag: **08.01.2004**

| | |
|---|---|
| (84) Benannte Vertragsstaaten:<br>**AT BE BG CH CY CZ DE DK EE ES FI FR GB GR HU IE IT LI LU MC NL PT RO SE SI SK TR**<br>Benannte Erstreckungsstaaten:<br>**AL LT LV MK** | (72) Erfinder: **Kusnezow, Gennadij, Dr.-Ing.**<br>**30853 Langenhagen (DE)** |
| (30) Priorität: **07.02.2003 DE 10305268** | (74) Vertreter: **Scheffler, Jörg et al**<br>**Tergau & Pohl**<br>**Patentanwälte**<br>**Adelheidstrasse 5**<br>**30171 Hannover (DE)** |
| (71) Anmelder: **LPKF Laser & Electronics AG**<br>**30827 Garbsen (DE)** | |

(54) **Laseranordnung mit resonatorinterner Frequenzkonvertierung**

(57) Die Erfindung betrifft eine Laseranordnung (1) mit resonatorinterner Frequenzkonvertierung. Der Laseranordnung (1) ist mit einem ersten Arm (2), der von einem ersten Reflektor und einem Auskoppler (4), gebildet wird und einen zweiten Arm (6), der von einem zweiten Reflektor (8), einem Frequenzkonverter (9) und dem Auskoppler (4) gebildet wird, ausgestattet. Der Auskoppler (4) ist einem Prisma (5) zugeordnet, in welches der frequenzkonvertierte Ausgangsstrahl (10) eingekoppelt und nach einer internen Reflexion an einer Totalreflexionsfläche (11) an einer Auskoppelfläche (12) in Richtung der optischen Achse (13) derart auskoppelbar ist, dass die optische Achse (13) und eine Hauptachse (3) des ersten Armes (2) übereinstimmen. Mit dem Prisma (5) wird mit geringem Aufwand eine Auskopplung in Richtung optischen Achse (13) erreicht, ohne dass zusätzliche Spiegel erforderlich sind. Zugleich entfällt der Aufwand zur relativen Positionierung der optischen Funktionsflächen.

Fig. 1 A

Fig. 1 B

EP 1 445 842 A2

## Beschreibung

Die Erfindung betrifft eine Laseranordnung mit resonatorinterner Frequenzkonvertierung, wobei ein Laserresonator einen ersten Arm , der von einem ersten Reflektor, einem aktiven Medium, und einem Auskoppler gebildet wird, und einen zweiten Arm , der von einem zweiten Reflektor , einem Frequenzkonverter und dem Auskoppler gebildet wird, aufweist, so dass ein frequenzkonvertierter Ausgangsstrahl mittels des Auskopplers ausgekoppelt wird, wobei der Laserresonator eine Länge aufweist, die der Summe der Längen des ersten Arms , und des zweiten Armes entspricht, wobei der Auskoppler als ein optisches Prisma ausgeführt ist, in welches der frequenzkonvertierte Ausgangsstrahl eingekoppelt und an einer Auskoppelfläche in Richtung der Ausgangsachse derart auskoppelbar ist, und diese Ausgangsachse und eine optische Achse des ersten Armes parallel zueinander sind.

Eine solche Laseranordnung ist beispielsweise durch DE 39 14 070 A1. Als nachteilig erweist sich dabei jedoch, dass die Ausgangsachse nicht mit der optischen Achse übereinstimmen kann, sondern lediglich eine Parallelität erreicht werden kann. Indem kleine Winkel vorgesehen werden, lässt sich zwar eine Annäherung der Ausgangsachse an die optische Achse ermöglichen, hingegen ist eine Übereinstimmung ausgeschlossen. Weiterhin führt der Einsatz des Prismas bei der DE 39 14 070 A1 auch zu einem unerwünschten elliptischen Querschnitt des Ausgangsstrahls, der sich bei praktischen Anwendungen als nachteilig erweist.

Durch die DE 196 80 463 T1 ist auch bereits eine weitere Laseranordnung mit resonatorinterner Frequenzkonvertierung bekannt. Dabei wird bereits ein Resonator in einer einfachen Geometrie, einer so genannten V-Anordnung, beschrieben. Der Resonator weist dabei einen ersten Arm auf, der von einem hochreflektierenden Spiegel und einem Auskoppler gebildet wird. Der zweite Arm des Resonators wird von einem Auskoppler und einem anderen hochreflektierenden Spiegel gebildet. Entlang der optischen Achse des zweiten Armes positioniert ist ein Verdopplerkristall. Der im Resonator erzeugte Laserstrahl mit der Grundwellenlänge $\lambda_1$ wird von dem Auskoppler, der für diese Wellenlänge eine hohe Reflexion aufweist, reflektiert und fällt auf einen als Verdopplerkristall ausgeführten Frequenzkonverter. Nach zwei Durchgängen tritt der in dem zweiten Arm frequenzverdoppelte Ausgangsstrahl mit der Wellenlänge $\lambda_2$, für welche der Auskoppler weitestgehend transmissiv ist, anschließend ohne eine weitere Ablenkung durch den Auskoppler in Richtung der Ausgangsachse aus.

Als nachteilig hat es sich bei dieser Bauform des Resonators erwiesen, dass die optische Achse des ersten Armes und die Ausgangsachse aufgrund der V-Anordnung einen Winkel zueinander einschließen. Durch diese zweidimensionale Anordnung wird ein erheblicher Konstruktionsaufwand erforderlich, um die optische Achse in die gewünschte Richtung zu bringen, weil die Strahlausgangsrichtung nicht mit der optischen Achse des Laserkristalls übereinstimmt.

Durch die US 59 36 983 A ist eine Laseranordnung mit resonatorinterner Frequenzkonvertierung bekannt, dessen Laserstrahl des ersten Armes mittels eines Spiegels umgelenkt wird und anschließend auf den Auskoppler trifft. Der in dem zweiten Arm frequenzkonvertierte Strahl tritt dann durch den Auskoppler derart aus, dass die Ausgangsachse parallel zu der optischen Achse des ersten Armes verläuft.

Als nachteilig erweist sich auch bei dieser Anordnung der zweidimensionale Aufbau des Resonators mit erheblichem Versatz der optischen Achse, wobei zusätzlich der Spiegel erforderlich ist und dadurch der Herstellungsaufwand erhöht wird.

Aus der US 60 61 370 A ist ferner auch die Auskopplung eines frequenzkonvertierten Ausgangsstrahls mittels einer Prismenanordnung bekannt. Zur Erzeugung einer Parallelität des frequenzkonvertierten Ausgangsstrahls gegenüber der optischen Achse sind jedoch zusätzliche Spiegel erfordern.

Man könnte daran denken, den in Richtung der Ausgangsachse gerichteten frequenzkonvertierten Strahl mittels weiterer Reflektorelemente derart abzulenken, dass dessen Achse mit der Achse des ersten Armes übereinstimmt. Hierzu ist jedoch ein zusätzlicher Aufwand erforderlich, der in der Praxis dazu geführt hat, dass solche Anordnungen vermieden werden.

Der Erfindung liegt die Aufgabe zugrunde, eine Möglichkeit zu schaffen, eine kompakte Laseranordnung derart auszuführen, dass die Achse des frequenzkonvertierte Ausgangsstrahls mit der optischen Achse des ersten Armes übereinstimmt und dabei auf zusätzliche Spiegel sowohl im ersten Arm als auch im Anschluss an die Auskopplung des Ausgangsstrahles zu verzichten.

Diese Aufgabe wird erfindungsgemäß mit einer Laseranordnung gemäß den Merkmalen des Anspruchs 1 gelöst. Die Unteransprüche betreffen besonders zweckmäßige Weiterbildungen der Laseranordnung.

Erfindungsgemäß ist also eine Laseranordnung vorgesehen, bei welcher das optisches Prisma derart ausgeführt ist, dass der frequenzkonvertierte Ausgangsstrahl nach einer internen Reflexion an zumindest einer Totalreflexionsfläche an der Auskoppelfläche auskoppelbar ist, wobei die Ausgangsachse und die optische Achse des ersten Armes übereinstimmen. Hierdurch wird in einfacher Weise eine Auskopplung des frequenzkonvertierten Ausgangsstrahles in Richtung einer Achse, die mit der optischen Achse des ersten Armes übereinstimmt, realisierbar, ohne dass hierzu zusätzliche Bauelemente zur Umlenkung des Laserstrahles des ersten Armes oder des frequenzkonvertierten Ausgangsstrahles erforderlich ist. Die Eintrittsfläche des Prismas ist dabei derart beschichtet, dass diese Eintrittsfläche einen Dispersionspiegel bildet. Der La-

serstrahl der Grundwellenlänge $\lambda_1$ wird dadurch im Wesentlichen total reflektiert, während der frequenzkonvertierte Ausgangsstrahl auf dem Rückweg zum Auskoppler im Wesentlichen ungehindert in das Prisma eintritt. An der Totalreflexionsfläche wird der frequenzkonvertierte Ausgangsstrahl zunächst abgelenkt und tritt dann unter einem Brechungswinkel an der Auskoppelfläche aus dem Prisma in Richtung der Ausgangsachse, die mit der optischen Achse des ersten Armes übereinstimmt, aus dem Resonator aus. Der Aufwand zur Herstellung und zur Justierung des Resonators wird dadurch wesentlich verringert, weil das Prisma sowohl die Funktion des Auskopplers als auch der Umlenkung des frequenzkonvertierten Ausgangsstrahles in die gewünschte Richtung erfüllt und dadurch die Anzahl der erforderliche Bauelemente vermindert wird. Zugleich wird die gesamte Konstruktion des Lasers kompakter und einfacher, weil die relativen Positionen der funktionalen Flächen des Prismas unveränderlich sind und keiner Justierung bedürfen.

Dabei wird eine besonders einfache Abwandlung dadurch erreicht, dass das Prisma lediglich eine Totalreflexionsfläche aufweist. Hierdurch wird eine einfache Gestaltung des Prismas erreicht, welches dadurch zugleich mit vergleichsweise geringem Aufwand hergestellt werden kann. Zugleich wird dabei eine geringe Baugröße erreicht, die eine kompakte Bauform des Lasers ermöglicht. Dies kann realisiert werden, wenn der Einfallswinkel i der Strahlen auf die Eintrittsfläche und der Eintrittswinkel auf die Totalreflexionsfläche im Prisma $i'_0$ (es soll gelten: $i'_0 > i_0$, wobei $i_0$ = arcsin $1/n$ und $n_0$ = Brechungsindex des Prismenmaterials) bei der Bedingung, dass die Eintrittswinkel an der Eintritts- und der Austrittsfläche übereinstimmen, in folgender Abhängigkeit voneinander stehen:

$$i + i_0 = 90° \qquad [1]$$

Dabei ist der Winkel $\alpha$ zwischen der Eintrittsfläche und der Totalreflexionsfläche des Prismas:

$$\alpha = i'_0 + \arcsin (\sin i/n) \qquad [2]$$

Beispielsweise ergibt sich daraus für ein Quarzprisma mit n = 1,461 ($\lambda$ = 532 nm) und i = 45°; $i'_0$ = 45° ($i'_0 > i_0$ = 43,2°) für $\alpha$ der Winkel 73°57').

Eine andere ebenfalls Erfolg versprechende Abwandlung der vorliegenden Erfindung wird dann ermöglicht, wenn die Eintrittsfläche und die Austrittsfläche des optischen Prismas den Brewster-Winkel zum Strahlachse einschließen, so dass die auftretenden Verluste für den p-polarisierten, ausgekoppelten Strahl minimiert werden können. Hierfür kann die Bedingung [1] für eine Totalreflexion nicht mehr gelten, so dass zwei Totalreflexionsflächen erforderlich werden. In diesem Fall gilt die Bedingung:

$$i + i'_0 + i''_0 = 180° \qquad [3]$$

wobei i = $\beta$ = arctan n der Brewsterwinkel ist und $i'_0$, $i''_0$ entsprechende Totalreflexionswinkel auf der ersten und der zweiten Totalreflexionsfläche mit $i'_0 > i_0$; $i''_0 > i_0$ sind. Dabei gelten für den Winkel $\alpha_1$ zwischen der Eintrittsfläche und der ersten Totalreflexionsfläche und für den Winkel $\alpha_2$ zwischen der Austrittsfläche und der zweiten Totalreflexionsfläche die Bedingungen:

$$\alpha_1 = i'_0 + \arctan 1/n$$

$$\alpha_2 = i''_0 - \arctan 1/n \qquad [4]$$

Für das angeführte Beispiel des Quarzprismas mit n = 1,461, $i'_0$ = 45° ergibt sich daraus für $i''_0$ = 79°23', $\alpha_1$, = 79°23', $\alpha_2$= 45°.

Eine besonders vorteilhafte Weiterbildung der Erfindung auch dadurch realisiert, dass der Frequenzkonverter zur Frequenzvervielfachung, beispielsweise in die zweite, dritte oder vierte Harmonische, ausgeführt ist. Dabei sind insbesondere nachstehende Besonderheiten zu berücksichtigen. Wenn der Laserresonator zur Erzeugung einer zweiten Harmonischen bestimmt ist, können minimale optische Verluste nur dann erreicht werden, wenn die Polarisation des Strahls auf der Grundwellenlänge $\lambda_1$ als s-Polarisation für die Eintrittsfläche des Prismas erfolgt. In diesem Fall wird der höhere Reflexionsgrad für die Wellenlänge $\lambda_1$ und die höhere Transmission der üblicherweise p-polarisierten, konvertierten Wellenlänge $\lambda_2$ für die Dispersionsbeschichtung auf der Eintrittsfläche besser und effektiver realisierbar. Außerdem wird die Austrittsfläche für die p-polarisierte Strahlung mit minimalen Verlusten passierbar. Für i = $\beta$ sind diese Verluste gleich Null. Im Falle der Erzeugung einer dritten oder vierten Harmonischen im Resonator, bei der üblicherweise die Polarisation der Wellenlänge $\lambda_1$ und der Wellenlänge $\lambda_3$ bzw. $\lambda_4$ parallel zueinander sind, kann zwischen dem Frequenzkonverter und dem Prisma ein kombiniertes Verzögerungsplättchen mit $1/1 \lambda_1$ & $1/2 \lambda_3$; $1/1 \lambda_1$ & $1/2 \lambda_4$ angeordnet werden. Dabei ändert sich die Polarisationsrichtung von $\lambda_1$ nicht, wobei sich zugleich die Polarisation mit $\lambda_3$ bzw. $\lambda_4$ auf 90° reduziert, so dass der frequenzkonvertierte Strahl das Prisma auch als p-polarisierter Strahl mit minimalen Verlusten passiert.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Prinzipskizze in

Fig.1a    eine Laseranordnung mit einem Prisma zur Erzeugung der zweiten Harmonischen;

Fig. 1b    eine Laseranordnung mit einem Prisma und einem kombinierten Verzögerungsplättchen zur Erzeugung der dritten Harmonischen (vierten Harmonischen);

Fig.2    das in Figur 1 dargestellte Prisma mit einer Totalreflexionsfläche;

Fig.3    ein weiteres Prisma mit zwei Totalreflexionsflächen.

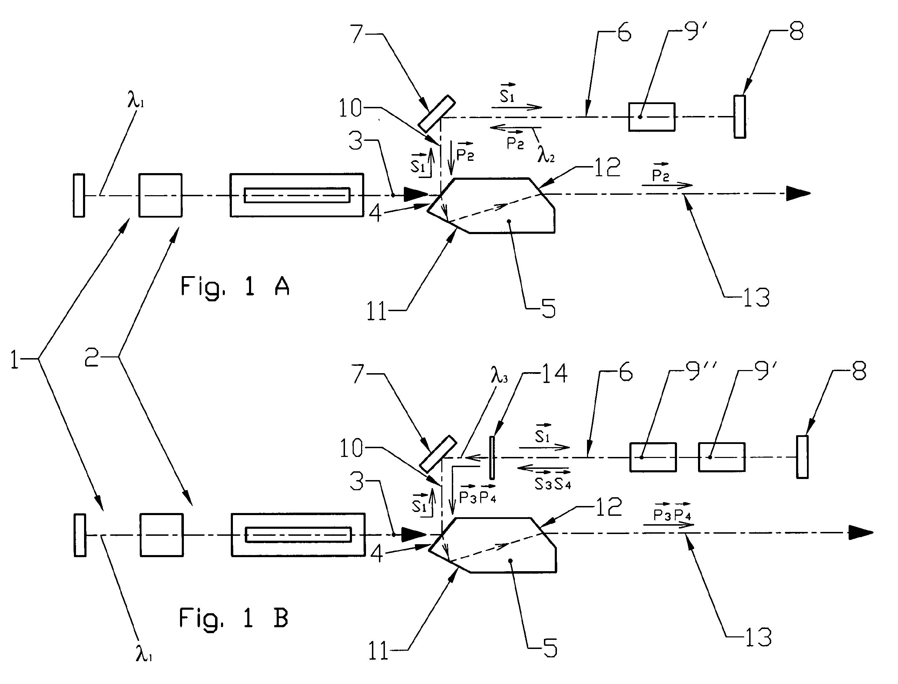

Figur 1 zeigt den prinzipiellen Aufbau einer erfindungsgemäßen Laseranordnung 1 mit resonatorinterner Frequenzkonvertierung, mit einem ersten Arm 2. Der erzeugte Laserstrahl der Grundwellenlänge $\lambda_1$ und der Polarisation $\vec{s}_1$ trifft aus dem ersten Arm 2 in Richtung 3 zunächst auf ein mit einem Auskoppler 4 ausgestattetes Prisma 5, wobei der Laserstrahl reflektiert und in Richtung eines zweiten Arms 6 mittels eines Umlenkspiegels 7 auf einen Reflektor 8 gelenkt wird. Wie in Figur 1A dargestellt, trifft der in umgekehrter Richtung mittels eines Frequenzkonverters 9' konvertierte Ausgangsstrahl 10 mit der beispielsweise verdoppelten Wellenlänge $\lambda_2$ und der Polarisation $\vec{p}_2$ erneut auf den Auskoppler 4, dessen nicht gezeigte Beschichtung für diese Wellenlänge $\lambda_2$ transmissiv ist. Abweichend davon zeigt Figur 1 B eine Abwandlung der Laseranordnung 1 zur Erzeugung der dritten (vierten) Harmonischen mit der Wellenlänge $\lambda_3$ bzw. $\lambda_4$, die hierzu mit einem kombinierten Verzögerungsplättchen 14 und zusätzlich zu dem Frequenzkonverter 9' mit einem weiteren Frequenzkonverter 9" ausgestattet ist. Der frequenzkonvertierte Ausgangsstrahl 10 mit p-Polarisation $\vec{p}_2$ (Fig. 1A), $\vec{p}_3$; $\vec{p}_4$ (Fig. 1B) tritt in das Prisma 5 ein, trifft dann auf eine Totalreflexionsfläche 11, an welcher eine Ablenkung in Richtung einer Auskoppelfläche 12 erfolgt. Der frequenzkonvertierte Ausgangsstrahl 10 tritt daher in Richtung einer optischen Achse 13 aus dem Prisma 5 aus, die mit der Richtung 3 des ersten Armes 2 übereinstimmt. Der praktische Einsatz wird dadurch wesentlich vereinfacht, weil die Anzahl der erforderlichen Bauelemente reduziert wird und deren relative Justierung zueinander entfällt.

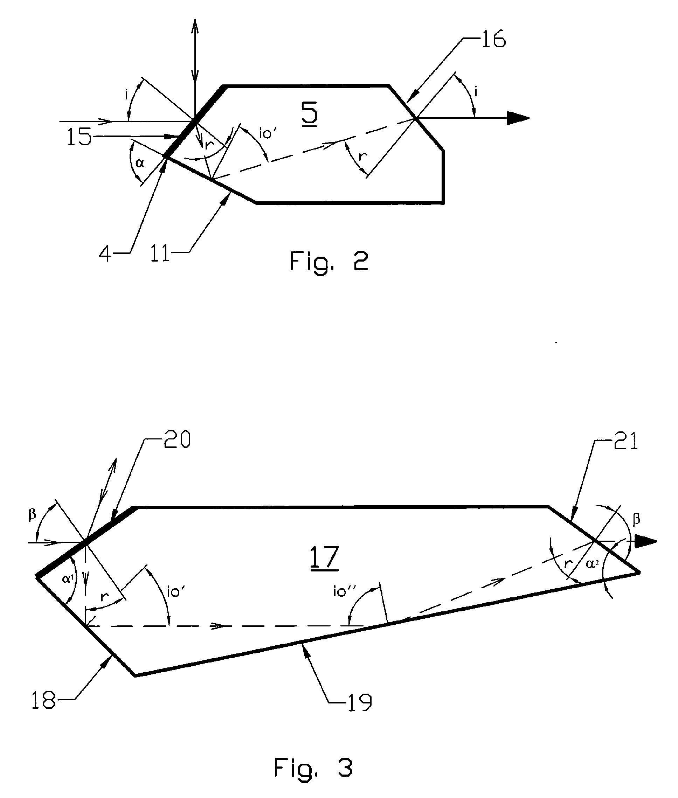

Figur 2 zeigt das in Figur 1 dargestellte Prisma 5 in einer vergrößerten Ansicht. Dargestellt ist der Einfallswinkel i der Strahlen auf eine Eintrittsfläche 15 des Auskopplers 4. Der Eintrittswinkel auf die Totalreflexionsfläche 11 in dem Prisma 5 ist durch $i'_0$ beschrieben, wobei die Eintrittswinkel i an der Eintrittsfläche 15 und einer Austrittsfläche 16 übereinstimmen und die Summe der Winkel $i + i_0 = 90°$ beträgt.

Figur 3 zeigt ein weiteres Prisma 17 mit zwei Totalreflexionsflächen 18, 19. Eine Eintrittsfläche 20 und eine Austrittsfläche 21 des optischen Prismas 17 schließen den Brewster-Winkel $\beta$ zur Strahlachse ein.

Dabei gelten für einen Winkel $\alpha_1$, zwischen der Eintrittsfläche 20 und der ersten Totalreflexionsfläche 18 und für einen Winkel $\alpha_2$ zwischen der Austrittsfläche 21 und der zweiten Totalreflexionsfläche 19 die Bedingungen: $\alpha_1$, $= i'_0 + \arctan 1/n$; $\alpha_2 = i''_0 - \arctan 1/n$.

**Patentansprüche**

1. Laseranordnung mit resonatorinterner Frequenzkonvertierung, wobei ein Laserresonator (1) einen ersten Arm (2), der von einem ersten Reflektor, einem aktiven Medium, und einem Auskoppler (4) gebildet wird, und einen zweiten Arm (6), der von einem zweiten Reflektor (8), einem Frequenzkonverter (9) und dem Auskoppler (4) gebildet wird, aufweist, so dass ein frequenzkonvertierter Ausgangsstrahl (10) mittels des Auskopplers (4) ausgekoppelt wird, wobei der Laserresonator (1) eine Länge aufweist, die der Summe der Längen des ersten Arms (2), und des zweiten Armes (6) entspricht, wobei der Auskoppler (4) als ein optisches Prisma (5, 17) ausgeführt ist, in welches der frequenzkonvertierte Ausgangsstrahl (10) eingekoppelt und an einer Auskoppelfläche (12) in Richtung der Ausgangsachse derart auskoppelbar ist, und diese Ausgangsachse und eine optische Achse (13) des ersten Armes (2) parallel zueinander sind, **dadurch gekennzeichnet, dass** das optisches Prisma (5, 17) derart ausgeführt ist, dass der frequenzkonvertierte Ausgangsstrahl (10) nach einer internen Reflexion an zumindest einer Totalreflexionsfläche (11) an der Auskoppelfläche (12) auskoppelbar ist, wobei die Ausgangsachse und die optische Achse (13) des ersten Armes (2) übereinstimmen.

2. Laseranordnung (1) nach Anspruch 1, **dadurch gekennzeichnet**, das Prisma (5) genau eine Totalreflexionsflächen (11) aufweist, wobei für einen Winkel $\alpha$ zwischen der Eintrittsfläche und der Totalreflexionsfläche des Prismas gilt: $\alpha = i'_0 + \arcsin (\sin i / n)$, wobei i dem Einfallswinkel der Strahlen auf die Eintrittsfläche, $i'_0$ dem Eintrittswinkel auf die Totalreflexionsfläche in dem Prisma (5, 17) und $n_0$ dem Brechungsindex des Prismenmaterials entspricht.

3. Laseranordnung (1) nach den Ansprüchen 1 oder 2, **dadurch gekennzeichnet, dass** eine Eintrittsfläche (20) und eine Austrittsfläche (21) des optischen Prismas (17) den Brewster-Winkel (ß) zur Strahlachse einschließen.

4. Laseranordnung (1) nach Anspruch 1, **dadurch gekennzeichnet, dass** das Prisma (17) zwei Totalreflexionsflächen (18, 19) aufweist, wobei für einen Winkel $\alpha_1$ zwischen der Eintrittsfläche (20) und der ersten Totalreflexionsfläche (18) und für einen Win-

kel $\alpha_2$ zwischen der Austrittsfläche (21) und der zweiten Totalreflexionsfläche (19) die Bedingungen: $\alpha_1 = i'_0 + \arctan 1/n$; $\alpha_2 = i''_0 - \arctan 1/n$ gelten, wobei $i'_0$ dem Eintrittswinkel auf erste Totalreflexionsfläche (18) in dem Prisma (5, 17), $i''_0$ dem Eintrittswinkel auf zweite Totalreflexionsfläche (19) in dem Prisma (5, 17)und n dem Brechungsindex des Prismenmaterials entspricht.

5.  Laseranordnung (1) nach zumindest einem der vorhergehenden Ansprüche, **dadurch gekennzeichnet, dass** der Frequenzkonverter (9') zur Erzeugung der zweiten Harmonischen ausgeführt ist.

6.  Laseranordnung (1) nach zumindest einem der Ansprüche 1 bis 4, **dadurch gekennzeichnet, dass** der Frequenzkonverter (9', 9") zur Erzeugung der dritten oder vierten Harmonischen mit einem kombinierten Verzögerungsplättchen (14) ausgestattet ist.

Fig. 1 A

$\lambda_1$

$\lambda_2$

$\vec{S_1}$

$\vec{P_2}$

$\vec{S_1}$

$\vec{P_2}$

$\vec{P_2}$

7

10

3

4

11

5

12

6

9'

8

13

1

2

Fig. 1 B

$\lambda_1$

$\lambda_3$

$\vec{S_1}$

$\vec{S_3}\,\vec{S_4}$

$\vec{S_1}$

$\vec{P_3}\,\vec{P_4}$

$\vec{P_3}\,\vec{P_4}$

7

10

3

4

11

5

12

14

6

9''

9'

8

13

Fig. 2

Fig. 3